# EUROPÄISCHE PATENTSCHRIFT

(11) **EP 3 792 058 B1**
(45) Veröffentlichungstag und Bekanntmachung des Hinweises auf die Patenterteilung: **11.10.2023**
(21) Anmeldenummer: 20204735.3
(22) Anmeldetag: 21.10.2011
(51) Int. Cl.: B32B 29/00, E04F 15/02, E04F 15/10

(54) **LAMINATPANEEL OHNE GEGENZUGPAPIER**
LAMINATE PANEL WITHOUT BACKING PAPER
PANNEAU STRATIFIÉ SANS CONTREPAREMENT

(43) Veröffentlichungstag der Anmeldung: 17.03.2021
(62) Teilanmeldung aus: 11776401.9
(73) Patentinhaber: Xylo Technologies AG, 9052 Niederteufen (CH)
(72) Erfinder: DÖHRING, Dieter, 01561 Großenhain (DE); SCHÄFER, Hans, 01561 Großenhain (DE)
(74) Vertreter: Bardehle Pagenberg Partnerschaft mbB Patentanwälte Rechtsanwälte

(56) Entgegenhaltungen:
- EP-A1- 1 627 977
- EP-A1- 2 345 545
- EP-A2- 1 454 763
- WO-A1-2004/076514
- DE-A1- 19 903 912
- DE-A1-102007 062 941
- DE-U1-202007 008 360
- US-A1- 2002 096 255
- US-A1- 2008 292 795

## Beschreibung

### 1. Gebiet der Erfindung

Die vorliegende Erfindung betrifft ein Laminatpaneel sowie ein Verfahren zu dessen Herstellung und ein Gegenzugmaterial das es ermöglicht, eine Gegenzuglage ohne Gegenzugpapier für das Laminatpaneel bereitzustellen.

### 2. Hintergrund der Erfindung

Im Stand der Technik sind eine Vielzahl von Fußbodenbelägen bekannt wie zum Beispiel Echtholz- Furnier- oder Laminatfußböden. Aufgrund der relativ kostengünstigen Herstellungsmöglichkeiten haben in den letzten Jahrzehnten besonders im Innenbereich Laminatfußböden an Beliebtheit gewonnen. Solche Laminatfußböden ermöglichen es beispielsweise, in einfacher und kostengünstiger Weise das optisch ansprechende Erscheinungsbild von verschiedenen Holzarten oder anderen natürlichen Materialien zu imitieren.

Laminatfußböden werden aus Laminatpaneelen zusammengesetzt, die dazu an ihren Kanten mit heutzutage gängigen Nut- Federverbindungen zum gegenseitigen Verbinden der Paneele versehen sind. Typischerweise bestehen solche Laminatpaneele aus einer zentralen Trägerlage aus Holz oder einem Holzwerkstoff wie MDF, HDF, Spanplatte oder OSB und weiteren dünneren Lagen, die verschiedene Funktionen erfüllen. Beispielsweise wird das für den Benutzer sichtbare Erscheinungsbild mit Hilfe einer Dekorlage auf der Oberseite der Trägerlage erzeugt. Diese Dekorlage wird beispielsweise im sogenannten Direktdruckverfahren direkt auf die Trägerlage aufgedruckt. Am meisten verbreitet ist jedoch die Verwendung von Dekorpapieren. Der Begriff"*Laminatpaneel"* soll hierin sowohl Paneele mit Papierlagen als auch direkt bedruckte Paneele umfassen, die nicht notwendigerweise mit Papierlagen versehen sind, jedoch mit einer Harzschicht auf der Oberseite.

Beim Herstellen des Dekors mittels eines Dekorpapiers wird zunächst eine geeignete Papierlage mit einem Dekor, z.B. einer Echtholzimitation oder auch mit einer Steinimitation bedruckt. Das bedruckte Papier wird dann mit einem geeigneten Harz, typischerweise mit einem Aminoharz wie Melamin- und/ oder Harnstoffharz, getränkt. Das so imprägnierte Papier wird vor der weiteren Verwendung üblicherweise getrocknet, damit es auf Rollen aufgerollt oder in Bogen auf Palette abgelegt und gelagert werden kann.

Zur Weiterverwendung wird die imprägnierte und trockene Dekorpapierlage auf die Trägerlage aufgebracht, bevor das Harz in einem weiteren Schritt ausgehärtet wird. Das endgültige Aushärten des Harzes, also das endgültige Vernetzen der Harzmolekülketten (und nicht das Trocknen der wässrigen Harzmischung, bei dem bloß Wasser entzogen wird), kann in einem eigenen Aushärteschritt, beispielsweise durch die Verwendung von Strahlung wie Elektronen-, Ultraviolett- oder Infrarotstrahlung erfolgen. Üblicherweise erfolgt das Aushärten aber durch die Einwirkung von Hitze und Druck beim Verpressen des Lagensystems.

Über der Dekorlage können weitere Papier- oder Harzlagen vorgesehen werden, wie etwa sogenannte Overlays. Solche Overlays werden ähnlich wie die Dekorpapierlage mittels imprägnierter Papiere erzeugt. Ein dünnes, geeignetes Papier wird mit einem Harz wie einem Aminoharz imprägniert und auf die Dekorlage aufgebracht. Beim Aushärten der Overlaylage wird diese zunächst undurchsichtige Papierlage durchsichtig, so dass das darunterliegende Dekor sichtbar ist. Die Overlaylage dient dazu, das Dekor gegen äußere Einflüsse zu schützen und es ist bekannt, zusätzlich dem Harz das zum Imprägnieren des Overlays verwendet wird, abriebfeste Partikel wie z.B. Korundpartikel zuzugeben, um die Abriebfestigkeit des späteren Laminatpaneels zu erhöhen. Zusätzlich können Dekorpapier und Overlay beim Verpressen und Aushärten mit einer Oberflächenstruktur versehen sein, die mit der sichtbaren Struktur des Dekors übereinstimmen kann, und die beispielsweise den haptischen Eindruck einer Holzoberfläche simuliert.

Eine bekannte Schwierigkeit die sich bei der Herstellung von Laminatpaneelen insbesondere bei Verwendung von Aminoharzen stellt ist, dass sich spätestens beim Verpressen verschiedene Lagen des zu verpressenden Lagensystems unterschiedlich zusammenziehen. Beim Aushärten der Harze, mit denen beispielsweise Dekor- und Overlaypapierlage imprägniert sind, erfolgt eine Kontraktion in Folge chemischer Polykondensation. Beim Verpressen werden eine Vielzahl chemischer Bindungen unter Wasserabspaltung gebildet. Das Wasser wandert beim Pressen aus der gehärteten Aminoharzschicht aus und es kommt dadurch zu einem deutlichen Volumenschrumpf. Auch können die verwendeten Papiere beim Verpressen Zugkräfte auf die Trägerlage ausüben. Durch diese Kontraktionen der Lagen entstehen Kräfte, die zu unerwünschten Verformungen der Trägerlage führen können. Die Trägerlage krümmt sich durch die Kontraktion konkav nach oben in Richtung der Dekorlage, bzw. der Overlaylage, so dass das erzeugte Paneel nur schwer verwendet werden kann.

Um eine solche Verformung der Paneele zu vermeiden, wird daher im Stand der Technik an der dem Dekor entgegengesetzten Rückseite des Laminatpaneels ein sogenannter Gegenzug angebracht, der die Zugwirkungen an der Oberseite ausgleichen soll. Die einfachste Möglichkeit einen Gegenzug bereitzustellen, der dieselbe Zugwirkung hat wie die Lagen an der Oberseite, ist es dieselben Lagen wie auf der Oberseite des Paneels auch an der Rückseite anzubringen, so dass sich die Kontraktionswirkungen dieser Lagen genau aufheben. Aus Kostengründen ist es aber häufig unerwünscht, die hochwertigen Lagen, die zur Erzeugung der sichtbaren Oberseite des Paneels verwendet werden, ebenfalls auf der im Gebrach nicht sichtbaren Rückseite zu verwenden. Aus diesem Grund wurden Kombinationen aus einfachem, kostengünstigen Gegenzugpapier und kostengünstigen Harzen entwickelt, die als Gegenzuglage auf der Rückseite von Laminatpaneelen verwendet werden, um die unerwünschte Wölbung des Paneels beim Verpressen zu verringern.

Ein typisches Beispiel aus dem Stand der Technik ist in der DE 199 03 912 A1 beschrieben. Gemäß dem darin beschriebenen Verfahren wird im Direktdruckverfahren zunächst eine farbgebende Lage direkt auf die Oberseite einer Trägerlage für ein Laminatpaneel aufgebracht. Auf diese Dekorlage wird ein imprägniertes Overlaypapier, und auf die Rückseite der Trägerlage wird ein Gegenzug in Form eines imprägnierten Gegenzugpapiers angebracht. Optional ist in DE 199 03 912 A1 vorgeschlagen beispielsweise das imprägnierte Overlaypapier zu trocknen und darauf eine zusätzliche Melaminharzlage aufzubringen, in die Korund eingestreut wird, um so eine abriebfeste Oberfläche für das Paneel bereitzustellen. Nach dem Aufbringen dieser Lagen werden diese verpresst um das fertige Laminat herzustellen.

Ein weiteres Beispiel aus dem Stand der Technik ist in DE 10 2008 027 235 A1 beschrieben. Gemäß dieser Patentanmeldung wird ein mit einem Aminoharz imprägniertes bedrucktes Dekorpapier auf eine Trägerlage für ein Laminatpaneel aufgebracht. Um Ausschussware, die aus Fehlpressungen resultiert, zu vermindern, schlägt diese Patentanmeldung vor, anstelle eines kostengünstigen Gegenzugs in Form von einfachem Gegenzugpapier und entsprechendem Harz, ebenfalls an der Rückseite des Laminatpaneels ein weiteres Dekor in Form von einem imprägnierten Dekorpapier vorzusehen. Mit anderen Worten wird in dieser Patentanmeldung vorgeschlagen, ein Laminatpaneel herzustellen, dessen beide Seiten Dekorseiten sind. Gemäß dieser Anmeldung bietet sich so die Möglichkeit, falls beim Pressen eine der beiden Dekorseiten beschädigt wird, das Paneel trotzdem zu verwenden, da auf der entgegengesetzten Seite ein Ersatzdekor vorhanden ist.

Da für jede einzelne Papierlage jeweils aufwendige Imprägnierschritte notwendig sind, ist es wünschenswert die Anzahl der (imprägnierten) Papierlagen zu reduzieren. Dementsprechend schlägt die deutsche Anmeldung DE 10 2007 062 941 A1 ein Laminatpaneel mit einem Gegenzug vor, der es ermöglicht auf die Verwendung einer Gegenzugpapierlage zu verzichten. Anstelle der Verwendung eines imprägnierten Gegenzugpapiers wird in dieser Anmeldung vorgeschlagen, mehrere dünne Lagen eines Aminoharzes direkt auf eine Rückseite einer Trägerlage für ein Laminatpaneel aufzubringen, wobei jeweils vor dem Aufbringen einer nächsten Aminoharz-Lage die vorherige Aminoharz-Lage angetrocknet wird. Obwohl es mit diesem Verfahren möglich ist auf ein Gegenzugpapier zu verzichten, ist das abwechselnde Aufbringen und Trocknen von einzelnen dünnen Harzlagen Zeit-, Kosten- und Verfahrensaufwendig.

In Anbetracht des oben zitierten Standes der Technik stellt sich die vorliegende Erfindung die Aufgabe, ein Laminatpaneel und ein Verfahren zu dessen Herstellung sowie ein Gegenzugmaterial bereitzustellen, womit es möglich wird auf kostengünstigere und einfachere Weise auf ein Gegenzugpapier für das Laminatpaneel zu verzichten.

Das Dokument EP 1454 763 A2 betrifft ein Verfahren zum Veredeln einer Holz- oder Holzwerkstoffplatte, insbesondere MDF- oder HDF-Platte mit einer Oberseite und einer Unterseite, mit folgenden Schritten: a) Auftragen einer Versiegelungsschicht aus Melaminharz auf die Oberseite der Platte, b) Aufdrucken eines Dekors auf die Versiegelungsschicht, c) Auftragen einer Schutzschicht aus Melaminharz auf das Dekor, d) Verpressen der Platte unter Temperatureinwirkung.

Das Dokument US 2008/292795 A1 betrifft ein Verfahren zur Herstellung einer Holzfaserplatte, umfassend: Aufdrucken eines Dekors auf eine oder zwei Seiten der Platte; Auftragen einer oder mehrerer Kunstharzschichten aus Melaminharz- oder Harnstoffharzschichten auf eine Seite mit dem Dekor und auf Seiten, die dem Dekor gegenüberliegen, unter Verwendung einer Rasterwalze; und Pressen der Kunstharzschichten.

Das Dokument EP 2 345 545 A1 betrifft eine direkt bedruckte Leichtbauplatte, umfassend eine leichte MDF- oder LDF-Trägerplatte mit einer Dichte von größer gleich 750 kg/m³, eine auf die Trägerplatte gedruckte Dekorschicht und eine transparente Schutzschicht.

Das Dokument EP 1627 977 A1 betrifft ein Verfahren zur Herstellung von Laminatfußbodenpaneelen, wobei die Paneele eine Unterschicht aufweisen, die aus einer Oberschicht aus imprägniertem Kraftpapier besteht, die mit einer Unterschicht aus z.B. Polyurethanschaum, Filz, Kork oder Gummi durch einen geeigneten Klebstoff verbunden ist.

Das Dokument US 2002/096255 A1 betrifft ein Verfahren zur Herstellung eines Kerns, der eine tragende Struktur für dekorative Laminate bildet, wobei der Kern Teilchen aus gehärtetem und gegebenenfalls geschäumtem, steifem Polyurethan-, Polyisocyanurat- und/oder Phenolharz besteht.

Diese und andere Aufgaben, die beim Lesen der folgenden Beschreibung noch genannt werden oder vom Fachmann erkannt werden können, werden mit einem Laminatpaneel nach Anspruch 1, einem Verfahren zu dessen Herstellung gemäß Anspruch 13 und einem Gegenzugmaterial gemäß Anspruch 15 gelöst.

### 3. Ausführliche Beschreibung der Erfindung

Gemäß der vorliegenden Erfindung wird ein Laminatpaneel bereitgestellt, das eine Trägerlage aus Holz oder Holzwerkstoff aufweist. Holzwerkstoffe sind dem Fachmann bekannte und typischerweise für Laminatpaneele verwendete Werkstoffe wie MDF (*"medium* density *fiberboard", "mitteldichte Faserplatte"*), HDF (*"high density fiberboard", "hochdichte Faserplatte"*) oder OSB (*"oriented strand board", "Grobspanplatte"*) oder sonstige dem Fachmann bekannte Holzwerkstoffe. Generell bevorzugt ist die Trägerlage eine Platte aus OSB, MDF oder HDF, Voll- und Massivholz, oder eine Spanplatte.

Die Oberseite des Laminatpaneels weist ein Dekor auf, wie insbesondere ein Dekorpapier oder eine im Direktdruckverfahren gedruckte Dekorlage. Die Oberseite weist weiter zumindest eine Lage aus einem gehärteten Harz auf. Dieses Harz kann beispielsweise zum Imprägnieren eines auf der Oberseite des Laminatpaneels bereitgestellten Dekorpapiers oder Overlaypapiers verwendet worden sein.

Gemäß der vorliegenden Erfindung weist die Rückseite des Laminatpaneels eine Gegenzuglage aus einem gehärteten Gegenzugmaterial auf, wobei es ein Kern der vorliegenden Erfindung ist, dass diese Gegenzuglage keine Papierlage, also keine kontinuierliche flächige Papierlage, aufweist. Diese Gegenzuglage dient dazu, die Zugwirkung der auf der Oberseite aufgebrachten Lagen zu kompensieren. Vorzugsweise hat die Gegenzuglage eine Dicke von mindestens 5 µm, bevorzugt von mindestens 10 µm, mehr bevorzugt von mindestens 15 µm, noch mehr bevorzugt von mindestens 50 µm, und am meisten bevorzugt von mindestens 75 µm. Außerhalb dieser Gegenzuglage können auf der Rückseite des Laminatpaneels weitere Lagen vorgesehen sein die auch Papierlagen umfassen können, wie insbesondere weitere Dekorpapiere, Schallschutzlagen etc.

In bevorzugten Ausführungsformen der vorliegenden Erfindung weist die Gegenzuglage eine Dicke im Bereich von 5 bis 300 µm, mehr bevorzugt im Bereich von 10 bis 200 µm, noch mehr bevorzugt im Bereich von 40 bis 170 µm, immer noch mehr bevorzugt im Bereich von 70 bis 145 µm, und am meisten bevorzugt im Bereich von 90 bis 105 µm auf. In einer weiteren Ausführungsform der vorliegenden Erfindung, nämlich im Fall, dass ein hoher Aminoharzanteil von mindestens 40 Gew.% im gehärteten Gegenzugmaterial vorgesehen ist, weist die Gegenzuglage eine Dicke im Bereich von 100 bis 500 µm, mehr bevorzugt im Bereich von 130 bis 470 µm, noch mehr bevorzugt im Bereich von 160 bis 440 µm, immer noch mehr bevorzugt im Bereich von 220 bis 380 µm, und am meisten bevorzugt im Bereich von 280 bis 320 µm auf. Die hierin generell verwendeten Messgrößen, wie Schichtdicken, Gewichtsangaben, Stoffmengenangaben, Temperatur- und Druckangaben, etc. sind im Rahmen der typischen Messtoleranzen zu verstehen, wie sie für den Fachmann selbstverständlich sind. Bei Schichtdicken, Gewichtsangaben und Stoffmengenangaben liegt diese Toleranz üblicherweise bei 5%.

Eine Armierung der Gegenzuglage beispielsweise durch eine Papierlage wie sie im Stand der Technik bekannt ist, ist für die erfindungsgemäße Gegenzuglage entbehrlich. Gemäß der vorliegenden Erfindung enthält 1 Kilogramm des gehärteten Gegenzugmaterials nämlich 300 bis 700 Gramm eines gehärteten Aminoharzes und 300 bis 700 Gramm Füllstoff. Unter Füllstoff werden vorzugsweise Materialien verstanden, die keine chemische Reaktion mit dem Aminoharz eingehen. Typische Füllstoffe sind für Anwendung in Formmassen in "Duroplaste" Kunststoffhanbuch Bd. 10, S. 156 ff., Hanserverlag 1988 beschrieben. Hierbei bezieht sich die Eigenschaft *"gehärtet"* auf den Zustand der entsprechenden Materialien im Endzustand des fertigen Laminatpaneels. Insbesondere bezeichnet *"gehärtet"* mit Bezug auf ein Aminoharz den vernetzten Zustand desselben, beispielsweise nach einem Aushärtungsverfahrensschritt. Es ist weiter für den Fachmann ersichtlich, dass bei einem Gewichtsverhältnis von 600 Gramm des Aminoharzes und 300 Gramm Füllstoff die restlichen 100 Gramm auf weitere mögliche Zusatzstoffe verteilt sind, wie beispielsweise Härter, Netzmittel, Emulgatoren, Verdickungsmittel, Weichmacher, etc.

In einer bevorzugten Ausführungsform des erfindungsgemäßen Laminatpaneels enthält ein Kilogramm des gehärteten Gegenzugmaterials bevorzugt 400 bis 650 Gramm, und am meisten bevorzugt 500 bis 600 Gramm des Aminoharzes, und bevorzugt 350 bis 600 Gramm, und am meisten bevorzugt 400 bis 500 Gramm Füllstoffe.

Die erfindungsgemäße Zugabe von Füllstoffen zu Aminoharz ermöglicht es, dass eine Armierung des Gegenzugmaterials durch beispielsweise eine Papierlage entbehrlich wird. Es hat sich überraschend herausgestellt, dass sich durch die Zugabe von Füllstoffen zu geeigneten Aminoharzen die Viskosität des so hergestellten Gegenzugmaterials so einstellen lässt, dass dieses beim Herstellungsverfahren des Laminatpaneels an die Rückseite der Trägerlage im flüssigen Zustand aufgebracht werden und im weiteren wie eine imprägnierte Papierschicht getrocknet und verpresst werden kann und zudem dieselbe Wirkung erzielt wie ein herkömmliches Gegenzugpapier und dass die so hergestellte Schicht auch unter extremen Belastungen wie dem Walken durch ständiges Begehen oder Temperatur- und Luftfeuchteeinfluss nicht reißt oder anderweitig zerstört wird. Durch diese geeignete Verarbeitungsviskosität wird es vermieden, dass das Gegenzugmaterial in weiteren Verfahrensschritten von der Rückseite der Trägerlage heruntertropft oder abläuft. In einer bevorzugten Ausführungsform erfolgt das Aufbringen des Gegenzugmaterials auf die Rückseite der Trägerlage durch Aufwalzen, Gießen oder alternativ durch Aufdüsen oder Aufspritzen.

Als Füllstoff kommen bevorzugt mineralische Füllstoffe zum Einsatz. Als besonders bevorzugt haben sich mineralische Füllstoffe aus der Gruppe der Silikate und zwar vorzugsweise Ton, Lehm, Talg, Glimmer, oder Neuburger Kieselerde erwiesen, insbesondere jedoch Kaolin. Alternativ haben sich Carbonate oder Sulfate wie vorzugsweise Kreide, Dolomit oder Baryt aber auch Glasperlen bewährt. Weiter bevorzugt sind Füllstoffe wie Gesteinsmehl, Glasfaser, Quarzmehl, kristalline Kieselsäure, Aluminium- oder Magnesiumhydroxide, ein Magnesium-, Zink- oder Kalziumoxide. In besonders bevorzugten Ausführungsformen kann der Füllstoff weiterhin eine Mischung der vorgenannten Materialien sein. Eingesetzt werden können aber auch bekannte organische Füllstoffe wie beispielsweise Holzstaub.

In einer bevorzugten Ausführungsform ist das Aminoharz ein Melaminharz oder ein Harnstoffharz oder eine Mischung dieser beiden Harze. Diese Harze sind vorteilhaft, da bei ihrer Herstellung in einfacher Weise die notwendigen Eigenschaften, wie beispielsweise die Viskosität und der Feststoffgehalt eingestellt werden können. Vorzugsweise wird das Aminoharz durch eine Mischung und Kondensation von Melamin und/oder einem Harnstoffderivat und einem Aldehyd, vorzugsweise Formaldehyd, hergestellt. Bei den Mischungen dieser Bestandteile kann das genaue Einstellen des jeweiligen Molverhältnisses dazu verwendet werden, die Eigenschaften des hergestellten Aminoharzes für seine Verwendung im Gegenzugmaterial zu optimieren.

In einer bevorzugten Ausführungsform werden zur Herstellung des Aminoharzes, welches zur Herstellung des Gegenzugmaterials verwendet werden soll, ein Aldehyd (insbesondere Formaldehyd) mit Melamin bzw. einem Harnstoffderivat in einem besonderen Mengenverhältnis gemischt und anschließend kondensiert. Dieses Aminoharz wird dann mit festen Füllstoffen zum Gegenzugmaterial vermischt, um in flüssiger Form aufgebracht zu werden. Vorzugsweise werden zur Herstellung des Aminoharzes 1 mol des Melamins und/oder Harnstoffderivats mit 0,5 bis 3 mol, bevorzugt 1 bis 2,5 mol, mehr bevorzugt 1,25 bis 2,25 mol, und am meisten bevorzugt 1,4 bis 2,1 mol des Aldehyds vermischt. Mit anderen Worten werden einer Mischung von beispielsweise 0,5 mol Melamin und 0,5 mol Harnstoffderivat (d.h. 1 mol Melamin und Harnstoffderivat) am meisten bevorzugt 1,4 bis 2,1 mol des Aldehyds zugegeben und einer chemischen Kondensationsreaktion unterzogen.

Eine solche Kondensationsreaktion wird vorzugsweise 60 bis 180 min, bevorzugt 80 bis 160 min, mehr bevorzugt 100 bis 140 min und am meisten bevorzugt 110 bis 130 min bei vorzugsweise 60 °C bis 130 °C, mehr bevorzugt bei 70 °C bis 120 °C, immer noch mehr bevorzugt bei 80 °C bis 110 °C und am meisten bevorzugt bei 85 °C bis 100 °C durchgeführt. Durch den Kondensationsgrad lässt sich u.a. die Viskosität beeinflussen. Als vorteilhaft hat sich erwiesen, den Kondensationsgrad des Aminoharzes über die Wasserverträglichkeit bei einer Wassertemperatur zwischen 18 und 30 °C, bevorzugt bei 23 °C zu bewerten. Als vorteilhaft erweist sich eine Wasserverträglichkeit innerhalb von 0,7 bis 1,9, bevorzugt innerhalb von 0,8 bis 1,8, mehr bevorzugt innerhalb von 0,9 bis 1,7, immer noch mehr bevorzugt innerhalb von 1,0 bis 1,6 und am meisten bevorzugt innerhalb von 1,1 bis 1,5. Hierbei wird eine Wasserverträglichkeit von beispielsweise 1,3 folgendermaßen verstanden: Gibt man in etwa 100 ml eines Aminoharzes bei ungefähr 23 °C eine Menge von 130 ml destilliertem Wasser unter kontinuierlichem Rühren hinzu, so bleibt diese Mischung (noch) klar. Bei höherer Wassermenge trübt das Harz jedoch ein und es bildet sich ein weißer Niederschlag bzw. eine Schichtentrennung von Harz und Wasser.

Nach der Herstellung des Aminoharzes wird dasselbe mit der erfindungsgemäßen Menge an Füllstoffen und optional weiteren Zusatzstoffen vermischt, um das Gegenzugmaterial herzustellen.

Zusammenfassend ist es der Kern der vorliegenden Erfindung, ein Aminoharz, vorzugsweise aus einer bestimmten Mischung aus einem Aldehyd und einem Melamin bzw. Harnstoffderivat, vorzugsweise durch Kondensation herzustellen, und dieses Aminoharz mit geeigneten Füllstoffen zu vermischen, wobei die erfindungsgemäßen Verhältnisse in den Ansprüchen definiert sind, um ein vorteilhaftes Gegenzugmaterial herzustellen. Dieses weist einerseits eine geeignete Viskosität auf, so dass das Gegenzugmaterial ohne zusätzliche Armierung in Form einer Papierlage an die Rückseite einer Trägerlage für ein Laminatpaneel aufgebracht werden kann. Andererseits hat es sich überraschend herausgestellt, dass diese erfindungsgemäße Materialmischung nach dem Aushärten, also nach dem endgültigen Vernetzen am Laminatpaneel, nicht spröde wird, und so in vorteilhafter Weise als Gegenzuglage ohne Papier verwendet werden kann. Überraschend ist auch, dass keine sich überlappenden und damit versteifenden Faserstoffe erforderlich sind. Im Gegenteil erweisen sich Füllstoffe, wie sie bisher in Formmassen eingesetzt wurden, in der beschriebenen Materialmischung trotz völlig anderer Verarbeitungsweise als geeignet. Vermutlich ist das darauf zurückzuführen, dass die Trägerplatte ein gewisses Saugverhalten aufweist und dass durch Penetrationsvorgänge in diese Trägerplatte bei geeigneter Verarbeitungsviskosität der Harz-Füllstoffmischung die Trägerplatte selbst die Armierungsfunktion des Papiers übernimmt. Die angegebenen Mischungsverhältnisse erlauben es die Zugeigenschaften des erfindungsgemäßen Gegenzugmaterials in einem weiten Bereich einzustellen. Somit ist es möglich für eine Vielzahl von unterschiedlichen Lagen auf der Oberseite einen jeweils geeigneten Gegenzug auf der Rückseite bereitzustellen.

Um die Eigenschaften des Gegenzugsmaterials weiter zu optimieren können in bevorzugten Ausführungsformen Weichmacher wie vorzugsweise Diethylenglykol und/oder ε-Caprolactan und/oder Zucker im Gegenzugmaterial vorhanden sein. Zusätzlich kann es von Vorteil sein, organische Stoffe zur gezielten Einstellung der Verarbeitungsviskosität wie insbesondere Celluloseacetat, Johannisbrotmehl oder Ähnliches vorzusehen.

Vorzugsweise enthält dabei ein Kilogramm des gehärteten Gegenzugmaterials zusätzlich 1 bis 500 Gramm, bevorzugt 5 bis 450 Gramm, mehr bevorzugt 10 bis 400 Gramm, noch mehr bevorzugt 15 bis 350 Gramm, immer noch mehr bevorzugt 25 bis 300 Gramm, und am meisten bevorzugt 50 bis 250 Gramm eines Weichmachers, vorzugsweise Diethylenglycol oder/und ε-Caprolactan.

Vorzugsweise enthält ein Kilogramm des gehärteten Gegenzugmaterials zusätzlich 1 bis 500 Gramm, bevorzugt 5 bis 450 Gramm, mehr bevorzugt 10 bis 400 Gramm, noch mehr bevorzugt 15 bis 350 Gramm, immer noch mehr bevorzugt 25 bis 300 Gramm, und am meisten bevorzugt 50 bis 250 Gramm eines Verdickungsmittels, bevorzugt eines Zuckers, mehr bevorzugt eines Polysaccharids.

Gemäß der vorliegenden Erfindung wird weiterhin ein Verfahren zum Herstellen des oben beschriebenen Laminatpaneels bereitgestellt. Erfindungsgemäß wird bei diesem Verfahren ein Gegenzugmaterial an die Rückseite der Trägerlage des Laminatpaneels im flüssigen Zustand aufgebracht, wobei dieses Gegenzugsmaterial keine Papierlage umfasst. Hierbei bedeutet "*flüssig"* in geeigneter Weise viskos, so dass das Gegenzugmaterial auf die Rückseite einer Trägerlage für ein Laminatpaneel aufgebracht werden kann.

Mit anderen Worten unterscheidet sich das erfindungsgemäße Verfahren von bekannten Verfahren dadurch, dass zum Herstellen eines Gegenzugs kein Gegenzugpapier nötig ist. Dadurch, dass wie oben beschrieben, das Gegenzugmaterial eine geeignete Viskosität aufweist, ist es möglich, das Gegenzugmaterial auf die Rückseite des Laminatpaneels aufzubringen, vorzugweise aufzuwalzen, zu gießen oder aufzudüsen, bzw. aufzuspritzen, ohne dass das Gegenzugmaterial beispielsweise aufgrund zu niedriger Zähigkeit von der Trägerlage abtropft oder abläuft. Nach dem Aufbringen kann das Gegenzugmaterial angetrocknet werden oder direkt, etwa durch die Anwendung von Strahlung wie Elektronenstrahlung, UV-Strahlung und/oder Infrarotstrahlung, bevorzugt jedoch durch Einfluss von Hitze und Druck während des Verpressens des Laminatpaneels ausgehärtet werden.

In einer bevorzugten Ausführungsform wird das Gegenzugmaterial gleichzeitig mit den Harzen auf der Oberseite der Trägerlage ausgehärtet. Das gleichzeitige Aushärten des Gegenzugmaterials und der Harze auf der Oberseite des Laminatpaneels hat den Vorteil, dass sich Kontraktionseffekte auf beiden Seiten des Laminatpaneels gegenseitig optimal aufheben und so Wölbungen des Paneels optimal verringert werden können.

In einer bevorzugten Ausführungsform umfasst das erfindungsgemäße Verfahren einen Verfahrensschritt vor dem Aufbringen des Gegenzugmaterials auf die Rückseite der Trägerlage, bei dem das Aminoharz des Gegenzugmaterials hergestellt wird durch Mischen von (i) Melamin und/oder einem Harnstoffderivat und (ii) einem Aldehyd, vorzugsweise Formaldehyd, wobei zur Herstellung des Aminoharzes 1 mol des Melamins und/oder Harnstoffderivats mit 0,5 bis 3 mol, bevorzugt 1 bis 2,5 mol, mehr bevorzugt 1,25 bis 2,25 mol, und am meisten bevorzugt 1,4 bis 2,1 mol des Aldehyds gemischt und kondensiert wird.

In einer bevorzugten Ausführungsform weist das flüssige Gegenzugmaterial eine Viskosität von 500 bis 100.000 mPas (Brookfild, Spindel 6), bevorzugt von 5.000 bis 98.000 mPas, mehr bevorzugt von 10.000 bis bis 95.000 mPas, noch mehr bevorzugt von 20.000 bis 90.000 mPas, immer noch mehr bevorzugt von 30.000 bis 80.000 mPas, und am meisten bevorzugt von 40.000 bis 70.000 mPas auf.

Im Folgenden werden nicht limitierende Beispiele gegeben, die das Verständnis der Erfindung erleichtern sollen:
Zur Herstellung des Gegenzugmaterials wird zunächst ein geeignetes Aminoharz hergestellt. Dazu werden 30 kg Melamin (entsprechend 238 mol) mit 32,8 kg wässriger 37 %-iger Formaldehydlösung (entsprechend 405 mol) in einem Behälter gemischt (d.h. 1 mol Melamin wird mit 1,7 mol Aldehyd gemischt) und der pH-Wert wird mit 30 %-iger Natronlauge auf 9,3 eingestellt. Anschließend wird innerhalb von 15 min unter Rühren auf 92 °C erwärmt, 120 min bei dieser Temperatur gerührt und abschließend innerhalb von 15 min auf Raumtemperatur abgekühlt. Bei dieser Prozedur reagieren die Komponenten chemisch miteinander (d.h. sie kondensieren) und es entsteht ein wässriges Melaminharz mit einer Viskosität von 14 - 17 s (ISO2431 und DIN 53211;
DIN Becher, Düse 4 mm) und einer Wasserverträglichkeit von 1,3 +/- 0,1. Dem so hergestellten Harz wird nun ein typischer Melaminharzhärter hinzugefügt, so dass eine Trübungszeit von 240 s erhalten wird. Im weiteren werden 50 kg eines Füllstoffs, und zwar Kaolin in Pulverform, 100 g eines gängigen Entschäumers sowie 1 kg eines Dispergiermittels zugegeben und das Ganze erneut für 30 Minuten gerührt. Anschließend werden 3 kg Diethylenglycol sowie 15 kg nicht raffinierter Rübenzucker als Weichmacher zugegeben und erneut für 60 Minuten gerührt. Diese Mischung wird mittels eines Gießvorhangs auf eine HDF-Trägerplatte appliziert und zwar werden 120 g/m² dieser Masse aufgegossen. Die so behandelte Trägerplatte wird in einem Düsentrockner 90 s bei 190 °C vorgetrocknet. Anschließend wird diese Trägerplatte gewendet, so dass sich die Gegenzugschicht auf der Plattenunterseite befindet. Auf die Oberseite werden ein imprägniertes Dekorpapier und ein imprägniertes Overlay aufgelegt. Das Paket wird 20 s bei einer Temperatur von 185 °C und einem spezifischen Pressdruck von 35 bar verpresst.

Auch ohne Vortrocknung ist dem Fachmann klar, dass spätestens nach dem Aushärten des Gegenzugmaterials am Paneel das beim Aufbringen des Gegenzugmaterials noch enthaltene Wasser nahezu vollständig verdampft (im endgültig gehärteten Zustand am Paneel enthält das Gegenzugmaterial weniger als 5 Gew. % Wasser, üblicherweise etwa 2 bis 7% Wasser).

Di hier in der Beschreibung und den Ansprüchen definierten Mengenangaben, die sich auf das gehärtete Gegenzugmaterial beziehen, sind auch bei der Herstellung des Gegenzugmaterials verwendbar: Wie oben erläutert und dem Fachmann bekannt, werden Aminoharze durch Kondensation von bsp. Formaldehyd mit Harnstoff oder Melamin hergestellt. Die Synthesereaktion wird in wässrigem Medium durchgeführt, darüber hinaus entsteht bekanntermaßen durch die Kondensation der Reaktionsmittel (d.h. Formaldehyd mit Harnstoff oder Melamin) zusätzliches Wasser. Das heißt, das "wässrige" Aminoharz, das zur Gegenzugmischung verarbeitet wird, enthält Wasser. Das enthaltende Wasser wird beim Härtungsprozess, der in der Regel über zwei Stufen verläuft (Vortrocknen und dann Verpressen/Aushärten), weitgehend beim Vortrocknen verdampft. Beim Verpressen entsteht erneut in geringem Umfang Wasser durch Polykondensation, das jedoch durch die Hitze und den Druck beim Verpressen ebenfalls ausgetrieben wird. Um den Anteil verbleibenden auskondensierten Harzes aus dem ursprünglichen wässrigen Aminoharz definieren zu können, ist im Stand der Technik der Begriff "Feststoffgehalt" eingeführt worden. Er gibt mit ausreichender Näherung an, wie viel Festmasse aus einem wässrigen Aminoharz letztendlich nach dem Aushärten bsp. an einem Produkt, in diesem Falle in der Gegenzugschicht, aus dem wässrigen Aminoharz verbleibt. Dieser Feststoffgehalt eines Harzes kann beispielsweise nach DIN 16916-2 (alt) oder DIN 16945 bestimmt werden.

Wenn hierin Gewichtsangaben auf das "Aminoharz" bezogen sind (wie etwa im Anspruch 1), so ist damit immer der Feststoffgehalt des Aminoharzes gemeint, also das Gewicht des Aminoharzes im ausgehärteten Zustand wie oben definiert, sofern nichts anderes angegeben ist.

Die obigen Feststellungen sollen anhand eines Beispiels verdeutlicht werden: Wenn beispielsweise 1 kg wässriges Aminoharz mit einem Feststoffgehalt von 60 % bestimmt wird, so beträgt der Wasseranteil 40 % oder 400 g, das heißt nach Aushärten verbleiben näherungsweise 600 g Festmasse (also "Aminoharz" gemäß der obigen Definition). Der Wasseranteil ist dabei wie oben erläutert die Summe aus:
(a) Wasser, das bei der Synthese zugeführt wurde,
(b) Wasser, welches als Kondensationswasser bei der Synthese entsteht und
(c) Polykondensationswasser, welches zusätzlich bei der endgültigen Härtung durch Polykondensation entsteht.

"Näherungsweise" deshalb, weil es voneinander leicht abweichende Normen zur Bestimmung des Feststoffgehaltes gibt und weil natürlich, wie dem Fachmann bekannt ist, der stattfindende Härtungsprozess in der Realität unvermeidlich leichten Abweichungen unterliegt. Allerdings sind die hierdurch entstehenden Abweichungen äußerst gering und liegen im Toleranzbereich für das vorliegende Verfahren.

Die im gehärteten Zustand gewünschten Mengenverhältnisse von Aminoharz und Füllstoff, wie sie im Anspruch 1 definiert sind, lassen sich im Gegenzugmaterial also dadurch erreichen, dass man beim Herstellen des Gegenzugmaterials den Feststoffgehalt des wässrigen Aminoharzes wie angegeben bestimmt und diesen Wert bei der Zugabe der weiteren Stoffe zugrunde legt. Dasselbe gilt dementsprechend also auch für die Mengenangaben für die Zugabe von Weichmacher und Verdickungsmittel etc.

### 4. Beschreibung der Figuren

Im Folgenden wird die Erfindung anhand der beigefügten Figuren näher erläutert, wobei:
- Fig. 1: eine schematische Darstellung einer Auftragsvorrichtung zum Auftragen des erfindungsgemäßen Gegenzugmaterials zeigt;
- Fig. 2: eine weitere Auftragsvorrichtung für das erfindungsgemäße Gegenzugmaterial zeigt, bei der zusätzlich eine Dekorlage in Form eines Dekorpapiers bereitgestellt wird;
- Fig. 3: noch eine weitere Auftragsvorrichtung zum Auftragen des erfindungsgemäßen Gegenzugmaterials mit einer Aushärtevorrichtung zeigt;
- Fig. 4: eine erste Ausführungsform eines Laminatpaneels mit einer Gegenzuglage zeigt; und
- Fig. 5: eine weitere Ausführungsform eines Laminatpaneels mit einer Gegenzuglage zeigt.

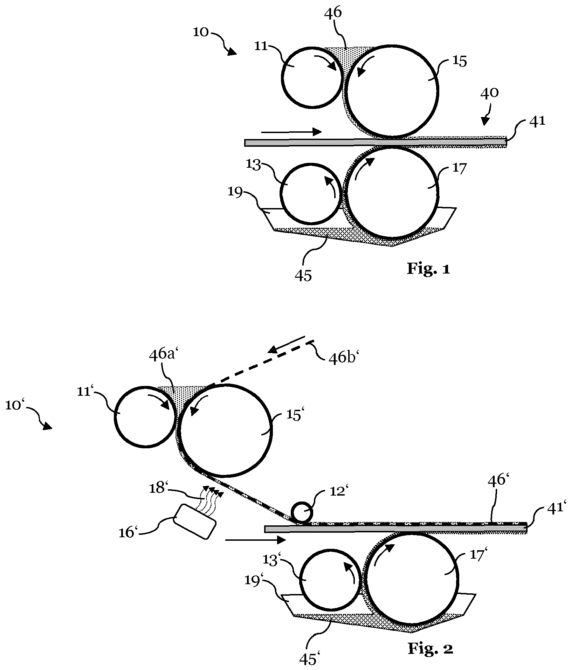

Figur 1 zeigt eine Vorrichtung 10 zum Aufbringen von Gegenzugmaterial 45 auf eine Rückseite eines Laminatpaneels 40. Wie man in der Figur erkennt, wird zum Aufbringen des Gegenzugmaterials 45 und eines Harzes 46 eine Trägerlage 41, etwa eine MDF-Platte, von links nach rechts durch die Auftragsvorrichtung 10 geführt. Dabei wird die Trägerlage 41 zwischen eine Gegenzugmaterialauftragswalze 17 und einer Harzauftragswalze 15 geführt. Die Gegenzugmaterialauftragswalze 17 befindet sich teilweise in einem Gegenzugmaterialreservoir 19, dass wie in der Figur zu sehen, teilweise mit flüssigem Gegenzugmaterial 45 gefüllt ist. Durch die gleichzeitige Drehung der Gegenzugmaterialauftragswalze 17 und der Bewegung der Trägerlage 41 wird das flüssige aber ausreichend viskose Gegenzugmaterial 45 von der Walze 17 auf die Rückseite der Trägerlage 41 aufgebracht.

Eine Portionierungswalze 13 dient dazu, überschüssiges Gegenzugmaterial 45 wieder zurück in das Reservoir 19 zu führen und gleichzeitig die Dicke des Gegenzugmaterials 45 geeignet voreinzustellen. In der gezeigten Vorrichtung 10 wird simultan mit dem Gegenzugmaterial 45 auf der Oberseite der Trägerlage 41 ein Harz 46 mittels einer Harzauftragswalze 15 auf die Trägerlage aufgebracht. Wie in der Figur zu erkennen, bildet dazu die Harzauftragswalze 15 mit einer weiteren Portionierungswalze 11 einen trichterförmigen Vorratsbereich in dem sich ein Vorrat an Harz 46 befindet. Im gezeigten Fall kann beispielsweise die Trägerlage beim Eintreten in die Auftragseinrichtung 10 bereits mit einem Dekor, wie beispielsweise mit einem im Direktdruck erzeugten Dekor, versehen sein, und das Harz 46 dient in diesem Falle beispielsweise zum Versiegeln der Dekorlage. Alternativ kann das Harz mit abriebfesten Partikeln, wie beispielsweise Korundpartikeln versehen sein zur Herstellung einer abriebfesten Oberfläche des Laminatpaneels.

Wie man Figur 1 entnehmen kann, ist es ein wesentliches Merkmal des Gegenzugmaterials, dass dieses eine geeignete Viskosität aufweist, so dass das Gegenzugmaterial mittels der Auftragswalze 17 an die Rückseite der Trägerlage 41 aufgebracht werden kann. Diese geeignete Viskosität wird wie oben beschrieben erreicht. So wird es möglich, das Gegenzugmaterial wie in Figur 1 gezeigt, ohne zusätzliche Armierung (wie etwa durch eine Papierlage) quasi selbsttragend auf die Rückseite der Trägerlage 41 aufzubringen.

In Figur 2 ist eine weitere Ausführungsform einer Auftragsvorrichtung 10' dargestellt. Auch in dieser Ausführungsform wird das Gegenzugmaterial 45' in einem Walzenauftragsverfahren mittels einer Gegenzugmaterialauftragswalze 17', einer Portionierungswalze 13' und einem Gegenzugmaterialreservoir 19' auf die Rückseite einer Trägerlage 41' für ein Laminatpaneel aufgebracht. Alternative kann das erfindungsgemäße Gegenzugmaterial 45' aber auch mit jedem anderen geeigneten Auftragsverfahren, wie beispielsweise durch Aufspritzen oder Aufdüsen, auf die Rückseite der Trägerlage 41' aufgetragen werden.

Im Unterschied zum in Figur 1 gezeigten Beispiel ist in Figur 2 eine Vorrichtung zum Aufbringen einer Dekorpapierlage 46' dargestellt. Hierzu wird ein Dekorpapier 46b' über eine erste Walze 15' in ein trichterförmiges Reservoir geleitet, das aus der ersten Walze 15' und einer Portionierungswalze 11' gebildet wird und in dem sich ein Vorrat an einem geeigneten Harz 46a' befindet. Dadurch wird das Gegenzugpapier 46b' mit dem Harz, wie z.B. einem Aminoharz, getränkt und imprägniert. Wie in der Figur gezeigt, kann das so imprägnierte Dekorpapier 46' in einer Trocknungseinrichtung 16' beispielsweise mit Heißluft 18' getrocknet werden.

Nach dem Trocknen wird das imprägnierte Dekorpapier über eine Umlenkwalze 12' auf die Oberseite der Trägerlage 41' aufgebracht. Nach Passieren der gezeigten Auftragsvorrichtung 10' können weitere Lagen wie beispielsweise eine Overlaylage auf der Oberseite oder eine Trittschalldämpfungslage auf der Rückseite der Trägerlage 41' aufgebracht werden, bevor das so erzeugte Lagensystem in bekannter Weise unter Druck und Temperatur zu einem Laminatpaneel verpresst wird.

Es können an der Rückseite der Trägerlage 41' insbesondere auch weitere Papierlagen vorgesehen sein, beispielsweise ein Schutzlage aus Papier, allerdings ist es wesentlich für die vorliegende Erfindung, dass das Gegenzugmaterial 45' durch die erfindungsgemäße Mischung von Aldehyd, Aminoharz und Füllstoffen so eingestellt ist, dass es ohne notwendige Hilfe einer weiteren Armierung, wie beispielsweise einer Papierlage, auf die Rückseite der Trägerlage 41' aufgebracht werden kann.

Das gehärtete Gegenzugmaterial ist in der Lage Kontraktionseffekte der auf der Oberseite der Trägerlage 41' aufgebrachten Lagen zu kompensieren. Vorzugsweise sollte die Gegenzuglage im gehärteten Zustand eine Dicke von mindestens 5 µm, bevorzugt von mindestens 10 µm, mehr bevorzugt von mindestens 15 µm, noch mehr bevorzugt von mindestens 50 µm, und am meisten bevorzugt von mindestens 75 µm haben.

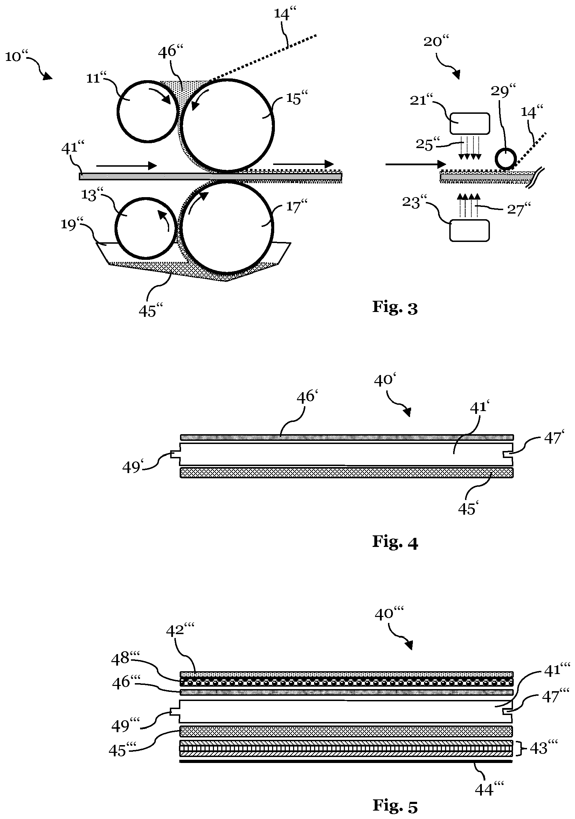

Figur 3 zeigt eine weitere Ausführungsform einer Auftragsvorrichtung 10" und einer im Prozess nachfolgend angeordneten Aushärtevorrichtung 20". Auch in der Auftragsvorrichtung 10" nach Figur 3 wird das Gegenzugmaterial mittels einer Gegenzugmaterialauftragswalze 17" auf die Rückseite einer Trägerlage 41" aufgetragen. Die in Figur 3 dargestellte Vorrichtung ist im Wesentlichen identisch mit der Vorrichtung die in Figur 1 gezeigt ist, mit dem Unterschied, dass in der Vorrichtung gemäß Figur 3 eine zusätzliche Prägefolie 14" verwendet wird. Diese wird mittels der Harzauftragswalze 15" zusammen mit dem Harz auf die Oberseite der Trägerlage 41" aufgelegt. Diese Prägefolie bleibt während des Aushärtevorgangs auf der oberen Harzlage um dieser, wie es dem Fachmann bekannt ist, eine Struktur zu geben, beispielsweise zur Imitation einer Echtholzstruktur oder einer Steinstruktur. Nach dem Aushärten wird die Prägefolie wie in der Figur gezeigt wieder entfernt.

Das Aushärten der oberen Harzlage sowie der Gegenzuglage erfolgt beispielsweise in einer Aushärtvorrichtung 20". Diese kann beispielsweise aus Strahlungsquellen 23", 21" bestehen, die beispielsweise Elektronenstrahlen, Ultraviolettstrahlen oder Infrarotstrahlen ausgeben, um die obere Harzlage und die Gegenzuglage auszuhärten. Wie es dem Fachmann bekannt ist, findet beim Aushärten eine Polykondensation statt, durch die die verwendeten Harze wie beispielsweise die Aminoharze vernetzt werden. Im Gegensatz zur Trocknung findet also eine chemische Veränderung der Harze statt. Bei der Trocknung wird hingegen nur Wasser entfernt.

Durch die erfindungsgemäße Mischung von Aminoharz mit Füllstoff wird nicht nur eine geeignete Viskosität des Gegenzugmaterials erreicht, die es ermöglicht das Gegenzugmaterial quasi freitragend auf die Rückseite der Trägerlage aufzubringen, sondern die erfindungsgemäße Mischung verhindert auch dass das Gegenzugmaterial nach dem Aushärten spröde wird. So kann das ausgehärtete Gegenzugmaterial in vorteilhafter Weise als Gegenzug ohne Gegenzugpapier verwendet werden.

Wie es für den Fachmann ersichtlich ist, kann das Aushärten des Gegenzugmaterials und des oberen Harzes alternativ zu dem gezeigten Strahlungshärteverfahren auch durch Druck und Hitze beispielsweise beim Verpressen des Lagensystems zu einem Laminatpaneel erfolgen. In einer bevorzugten Ausführungsform erfolgt das Aushärten des Gegenzugmaterials und der Harzlage auf der Oberseite der Trägerlage im Wesentlichen gleichzeitig, so dass Kontraktionseffekte durch die Lagen auf der Oberseite der Trägerlage optimal durch das Aushärten des Gegenzugmaterials auf der Rückseite kompensiert werden.

Figur 4 zeigt eine schematische Darstellung eines erfindungsgemäßen Laminatpaneels 40' mit einer Gegenzuglage 45' ohne Papierlage, einer Trägerlage 41' und einem Dekor mit einer Lage aus gehärtetem Harz 46'. Die Trägerlage 41' besteht aus Holz oder einem Holzwerkstoff, vorzugsweise aus MDF, HDF oder OSB oder ähnlichen Holzwerkstoffen wie sie dem Fachmann bekannt sind. Das dargestellte Laminatpaneel kann beispielsweise verwendet werden, um einen Fußboden im Innenbereich eines Hauses zu bilden, wobei Laminatpaneele mittels Nut- Federverbindungen 47', 49' wie sie der Fachmann kennt miteinander verbunden werden.

Figur 5 zeigt eine schematische Darstellung einer weiteren Ausführungsform eines erfindungsgemäßen Laminatpaneels 40‴. Wie Figur 5 zu entnehmen ist, weist das Laminatpaneel 40‴ eine Trägerlage 41‴ mit Nut- Federverbindungen 47‴, 49‴ auf, das an seiner Rückseite die erfindungsgemäße Gegenzuglage 45‴ hat. Auf der Oberseite des Laminatpaneels 41‴ befindet sich eine Dekorlage 46‴ die wie schon oben beschrieben zur Imitation beispielsweise einer Holzoberfläche vorgesehen ist.

Das dargestellte Laminatpaneel 40‴ weist weitere Lagen auf, nämlich eine Overlaylage 42‴, eine im gezeigten Fall dreilagige Trittschalldämpfungslage 43‴ und eine untere Schutzlage aus 44‴ Papier. Die Overlaylage 42‴ kann beispielsweise eine mit einem Aminoharz imprägnierte Papierlage sein. Zusätzlich weist das Laminatpaneel 40‴ im gezeigten Fall eine Lage abriebfester Partikel, wie z.B. Korund-Partikel 48‴ auf. Wie es dem Fachmann bekannt ist, können diese abriebfesten Partikel alternativ in der gesamten oberen Lage verteilt sein, insbesondere auch im Overlay 42‴enthalten sein. Zusätzlich können abriebfeste Partikel auch in einer Lage auf der Rückseite der Trägerlage 41‴angeordnet sein.

## Patentansprüche

1. Laminatpaneel (40; 40'; 40"; 40‴) aufweisend eine Trägerlage (41; 41'; 41"; 41‴) aus Holz oder Holzwerkstoff, wobei zumindest die Oberseite des Laminatpaneels (40; 40'; 40"; 40‴) ein Dekor und eine Lage aus einem gehärteten Harz (46; 46'; 46"; 46‴) aufweist, und wobei die Rückseite des Laminatpaneels (40; 40'; 40"; 40‴) eine Gegenzuglage aus einem gehärteten Gegenzugmaterial (45; 45'; 45"; 45‴) aufweist, und wobei die Gegenzuglage keine Papierlage aufweist,
**dadurch gekennzeichnet, dass**
ein Kilogramm des gehärteten Gegenzugmaterials die folgenden Bestandteile enthält:
| | |
|---|---|
| Aminoharz: | 300 bis 700 Gramm |
| Füllstoff: | 300 bis 700 Gramm. |

2. Laminatpaneel (40; 40'; 40"; 40‴) gemäß Anspruch 1, **dadurch gekennzeichnet, dass** das Aminoharz ein Melaminharz und/oder ein Harnstoffharz ist.

3. Laminatpaneel (40; 40'; 40"; 40‴) gemäß einem der vorhergehenden Ansprüche, **dadurch gekennzeichnet, dass** das Aminoharz hergestellt ist durch Mischung von (i) Melamin und/oder einem Harnstoffderivat und (ii) einem Aldehyd, vorzugsweise Formaldehyd, wobei zur Herstellung des Aminoharzes 1 mol des Melamins und/oder Harnstoffderivats mit 0,5 bis 3 mol, bevorzugt 1 bis 2,5 mol, mehr bevorzugt 1,25 bis 2,25 mol, und am meisten bevorzugt 1,4 bis 2,1 mol des Aldehyds gemischt wird.

4. Laminatpaneel (40; 40'; 40"; 40‴) gemäß einem der vorhergehenden Ansprüche, **dadurch gekennzeichnet, dass** ein Kilogramm des gehärteten Gegenzugmaterials 400 bis 650 Gramm, und am meisten bevorzugt 500 bis 600 Gramm des Aminoharzes enthält.

5. Laminatpaneel (40; 40'; 40"; 40‴) gemäß einem der vorhergehenden Ansprüche, **dadurch gekennzeichnet, dass** ein Kilogramm des gehärteten Gegenzugmaterials 350 bis 600 Gramm, und am meisten bevorzugt 400 bis 500 Gramm Füllstoffe enthält.

6. Laminatpaneel (40; 40'; 40"; 40‴) gemäß einem der vorhergehenden Ansprüche, **dadurch gekennzeichnet, dass** der Füllstoff ein mineralischer Füllstoff ist.

7. Laminatpaneel (40; 40'; 40"; 40‴) gemäß einem der vorhergehenden Ansprüche, **dadurch gekennzeichnet, dass** der Füllstoff eines oder mehrere der folgenden Materialien aufweist:
ein Silikat, vorzugsweise Ton, Lehm, Talk, Glimmer, Kaolin oder Neuburger Kieselerde; ein Karbonat oder ein Sulfat, vorzugsweise Kreide, Dolomit, Baryt oder Glasperlen;
oder Gesteinsmehl, Glasfaser, Quarzmehl, kristalline Kieselsäure, ein Aluminium- oder Magnesiumhydroxid, ein Magnesium-, Zink- oder Kalziumoxid.

8. Laminatpaneel (40; 40'; 40"; 40‴) gemäß einem der vorhergehenden Ansprüche, **dadurch gekennzeichnet, dass** die Gegenzuglage eine Dicke von mindestens 5 µm, bevorzugt von mindestens 10 µm, mehr bevorzugt von mindestens 15 µm, noch mehr bevorzugt von mindestens 50 µm, und am meisten bevorzugt von mindestens 75 µm hat.

9. Laminatpaneel (40; 40'; 40"; 40‴) gemäß einem der vorhergehenden Ansprüche, **dadurch gekennzeichnet, dass** ein Kilogramm des gehärteten Gegenzugmaterials zusätzlich 1 bis 500 Gramm, bevorzugt 5 bis 450 Gramm, mehr bevorzugt 10 bis 400 Gramm, noch mehr bevorzugt 15 bis 350 Gramm, immer noch mehr bevorzugt 25 bis 300 Gramm, und am meisten bevorzugt 50 bis 250 Gramm eines Weichmachers, vorzugsweise Diethylenglycol oder/und ε-Caprolactan, enthält.

10. Laminatpaneel (40; 40'; 40"; 40‴) gemäß einem der vorhergehenden Ansprüche, **dadurch gekennzeichnet, dass** ein Kilogramm des gehärteten Gegenzugmaterials zusätzlich 1 bis 500 Gramm, bevorzugt 5 bis 450 Gramm, mehr bevorzugt 10 bis 400 Gramm, noch mehr bevorzugt 15 bis 350 Gramm, immer noch mehr bevorzugt 25 bis 300 Gramm, und am meisten bevorzugt 50 bis 250 Gramm eines Verdickungsmittels, bevorzugt eines Zuckers, mehr bevorzugt eines Polysaccharids, enthält.

11. Laminatpaneel (40; 40'; 40"; 40‴) gemäß einem der vorhergehenden Ansprüche, **dadurch gekennzeichnet, dass** der Füllstoff weiter einen organischer Füllstoff ist, insbesondere Cellulose oder Holzmehl umfasst.

12. Laminatpaneel (40; 40'; 40"; 40‴) gemäß einem der vorhergehenden Ansprüche, **dadurch gekennzeichnet, dass** ein Kilogramm des gehärteten Gegenzugmaterials enthält:
| | |
|---|---|
| Aminoharz: | Füllstoff: |
| 400 bis 650 Gramm, | 350 bis 600 Gramm; |
| am meisten bevorzugt: | 500 bis 600 Gramm 400 bis 500 Gramm. |

13. Verfahren zur Herstellung eines Laminatpaneels gemäß einem der Ansprüche 1 - 12, wobei das Verfahren die folgenden Schritte aufweist:
- Bereitstellen einer Trägerlage;
- Bereitstellen eines Dekors mindestens auf der Oberseite der Trägerlage
- Aufbringen von Harz auf die Oberseite der Trägerlage im flüssigen Zustand;
- Aufbringen von Gegenzugmaterial, das keine Papierlage umfasst, an die Rückseite der Trägerlage im flüssigen Zustand;
- in einem darauf folgenden Verfahrensschritt Aushärten des Harzes und des Gegenzugmaterials, sodass
ein Kilogramm des gehärteten Gegenzugmaterials die folgenden Bestandteile enthält:
| | |
|---|---|
| Aminoharz: | 300 bis 700 Gramm |
| Füllstoff: | 300 bis 700 Gramm; |
und
- nach oder während dem Aushärten des Harzes und des Gegenzugmaterials:
- Verpressen der bei den vorangehenden Verfahrensschritten erzeugten Lagen zu einem Laminatpaneel.

14. Verfahren gemäß Anspruch 13, **dadurch gekennzeichnet, dass** in einem Verfahrensschritt vor dem Aufbringen des Gegenzugmaterials auf die Rückseite der Trägerlage das Aminoharz des Gegenzugmaterials hergestellt wird durch Mischen von (i) Melamin und/oder einem Harnstoffderivat und (ii) einem Aldehyd, vorzugsweise Formaldehyd, wobei zur Herstellung des Aminoharzes 1 mol des Melamins und/oder Harnstoffderivats mit 0.5 bis 3 mol, bevorzugt 1 bis 2,5 mol, mehr bevorzugt 1,25 bis 2,25 mol, und am meisten bevorzugt 1,4 bis 2,1 mol des Aldehyds gemischt wird.

15. Gegenzugmaterial geeignet für die Verwendung als Gegenzuglage ohne Papierlage für Laminatpaneele, die eine Trägerlage aus Holz oder Holzwerkstoff aufweisen, wobei zumindest die Oberseite der Laminatpaneele ein Dekor und eine Lage aus einem gehärteten Harz aufweisen,
**dadurch gekennzeichnet, dass**
1 Kilogramm von Gegenzugmaterial im gehärteten Zustand enthält:
| | |
|---|---|
| Aminoharz (gehärtet): | 300 bis 700 Gramm |
| Füllstoff: | 300 bis 700 Gramm, |
wobei das Aminoharz hergestellt ist durch Mischung von 1 mol Melamin und/oder Harnstoffderivat mit 0,5 bis 3 mol Aldehyd, bevorzugt 1 bis 2,5 mol, mehr bevorzugt 1,25 bis 2,25 mol, und am meisten bevorzugt 1,4 bis 2,1 mol Aldehyd.

## Claims

1. Laminate panel (40; 40'; 40"; 40‴) having a carrier layer (41; 41'; 41"; 41‴) of wood or wood-based material, wherein at least the upper side of the laminate panel (40; 40'; 40"; 40‴) has a decor and a layer of a cured resin (46; 46'; 46"; 46‴), and wherein the rear side of the laminate panel (40; 40'; 40"; 40‴) has a counter-tension layer of a cured counter-tension material (45; 45'; 45"; 45‴), and wherein the counter-tension layer has no paper layer,
**characterised in that**
one kilogram of the cured counter-tension material contains the following constituents:
| | |
|---|---|
| amino resin: | 300 to 700 grams |
| filler: | 300 to 700 grams. |

2. Laminate panel (40; 40'; 40"; 40‴) according to claim 1, **characterised in that** the amino resin is a melamine resin and/or a urea resin.

3. Laminate panel (40; 40'; 40"; 40‴) according to one of the preceding claims, **characterised in that** the amino resin is produced by mixing (i) melamine and/or a urea derivative and (ii) an aldehyde, preferably formaldehyde, wherein for producing the amino resin 1 mol of the melamine and/or urea derivative is mixed with 0.5 to 3 mol, preferably 1 to 2.5 mol, more preferably 1.25 to 2.25 mol, and most preferably 1.4 to 2.1 mol of the aldehyde.

4. Laminate panel (40; 40'; 40"; 40‴) according to one of the preceding claims, **characterised in that** one kilogram of the cured counter-tension material contains 400 to 650 grams, and most preferably 500 to 600 grams of the amino resin.

5. Laminate panel (40; 40'; 40"; 40‴) according to one of the preceding claims, **characterised in that** one kilogram of the cured counter-tension material contains 350 to 600 grams, and most preferably 400 to 500 grams of fillers.

6. Laminate panel (40; 40'; 40"; 40‴) according to one of the preceding claims, **characterised in that** the filler is a mineral filler.

7. Laminate panel (40; 40'; 40"; 40‴) according to one of the preceding claims, **characterised in that** the filler comprises one or more of the following materials:
a silicate, preferably clay, loam, talc, mica, kaolin or Neuburg silica; a carbonate or a sulfate, preferably chalk, dolomite, barite or glass beads;
or rock flour, glass fibre, quartz flour, crystalline silica, an aluminium or magnesium hydroxide, a magnesium, zinc or calcium oxide.

8. Laminate panel (40; 40'; 40"; 40‴) according to one of the preceding claims, **characterised in that** the counter-tension layer has a thickness of at least 5 µm, preferably of at least 10 µm, more preferably of at least 15 µm, even more preferably of at least 50 µm, and most preferably of at least 75 µm.

9. Laminate panel (40; 40'; 40"; 40‴) according to one of the preceding claims, **characterised in that** one kilogram of the cured counter-tension material additionally contains 1 to 500 grams, preferably 5 to 450 grams, more preferably 10 to 400 grams, even more preferably 15 to 350 grams, still more preferably 25 to 300 grams, and most preferably 50 to 250 grams of a plasticizer, preferably diethylene glycol or/and ε-caprolactone.

10. Laminate panel (40; 40'; 40"; 40‴) according to one of the preceding claims, **characterised in that** one kilogram of the cured counter-tension material additionally contains 1 to 500 grams, preferably 5 to 450 grams, more preferably 10 to 400 grams, even more preferably 15 to 350 grams, still more preferably 25 to 300 grams, and most preferably 50 to 250 grams of a thickener, preferably a sugar, more preferably a polysaccharide.

11. Laminate panel (40; 40'; 40"; 40‴) according to one of the preceding claims, **characterised in that** the filler is further an organic filler, in particular comprises cellulose or wood flour.

12. Laminate panel (40; 40'; 40"; 40‴) according to one of the preceding claims, **characterised in that** one kilogram of the cured counter-tension material contains:
| | |
|---|---|
| amino resin: | filler: |
| 400 to 650 grams, | 350 to 600 grams; |
| most preferably: 500 to 600 grams | 400 to 500 grams. |

13. Method for producing a laminate panel according to one of claims 1-12, wherein the method comprises the following steps:
- providing a carrier layer;
- providing a decor at least on the upper side of the carrier layer
- applying resin to the upper side of the carrier layer in the liquid state;
- applying counter-tension material, which does not comprise a paper layer, to the rear side of the carrier layer in the liquid state;
- in a subsequent method step, curing the resin and the counter-tension material, so that
one kilogram of the cured counter-tension material contains the following constituents:
| | |
|---|---|
| amino resin: | 300 to 700 grams |
| filler: | 300 to 700 grams; |
and
- after or during the curing of the resin and the counter-tension material:
- pressing the layers produced in the preceding method steps to form a laminate panel.

14. Method according to claim 13, **characterised in that** in a method step before applying the counter-tension material to the rear side of the carrier layer, the amino resin of the counter-tension material is produced by mixing (i) melamine and/or a urea derivative and (ii) an aldehyde, preferably formaldehyde, wherein for producing the amino resin 1 mol of the melamine and/or urea derivative is mixed with 0.5 to 3 mol, preferably 1 to 2.5 mol, more preferably 1.25 to 2.25 mol, and most preferably 1.4 to 2.1 mol of the aldehyde.

15. Counter-tension material suitable for use as a counter-tension layer without a paper layer for laminate panels which have a carrier layer of wood or wood-based material, wherein at least the upper side of the laminate panels have a decor and a layer of a cured resin,
**characterised in that**
1 kilogram of counter-tension material in the cured state contains:
| | |
|---|---|
| amino resin (cured): | 300 to 700 grams |
| filler: | 300 to 700 grams, |
wherein the amino resin is produced by mixing 1 mol of melamine and/or urea derivative with 0.5 to 3 mol of aldehyde, preferably 1 to 2.5 mol, more preferably 1.25 to 2.25 mol, and most preferably 1.4 to 2.1 mol of aldehyde.

## Revendications

1. Panneau stratifié (40 ; 40' ; 40" ; 40‴) comportant une couche support (41 ; 41' ; 41" ; 41‴) en bois ou en un matériau à base de bois, dans lequel au moins la face supérieure du panneau stratifié (40 ; 40' ; 40" ; 40‴) comporte un décor et une couche en une résine durcie (46 ; 46' ; 46" ; 46‴), et dans lequel la face arrière du panneau stratifié (40 ; 40' ; 40" ; 40‴) présente une couche de contretraction en un matériau de contretraction durci (45 ; 45' ; 45" ; 45‴), et dans lequel la couche de contretraction ne comprend pas de couche de papier,
**caractérisé en ce que**
un kilogramme du matériau de contretraction durci contient les constituants suivants : Résine aminoplaste : 300 à 700 grammes
| | |
|---|---|
| Charge : | 300 à 700 grammes. |

2. Panneau stratifié (40 ; 40' ; 40" ; 40‴) selon la revendication 1, **caractérisé en ce que** la résine aminoplaste est une résine de mélamine et/ou une résine d'urée.

3. Panneau stratifié (40 ; 40' ; 40" ; 40‴) selon l'une des revendications précédentes, **caractérisé en ce que** la résine aminoplaste est fabriquée par mélange (i) de mélamine et/ou d'un dérivé de l'urée et (ii) d'un aldéhyde, de préférence le formaldéhyde, la fabrication de la résine aminoplaste s'effectuant par mélange de 1 mole de la mélamine et/ou du dérivé de l'urée avec 0,5 à 3 moles, de préférence 1 à 2,5 moles, plus particulièrement 1,25 à 2,25 moles, et tout spécialement 1,4 à 2,1 moles de l'aldéhyde.

4. Panneau stratifié (40 ; 40' ; 40" ; 40‴) selon l'une des revendications précédentes, **caractérisé en ce qu'**un kilogramme du matériau de contretraction durci contient 400 à 650 grammes, et tout spécialement 500 à 600 grammes, de la résine aminoplaste.

5. Panneau stratifié (40 ; 40' ; 40" ; 40‴) selon l'une des revendications précédentes, **caractérisé en ce qu'**un kilogramme du matériau de contretraction durci contient 350 à 600 grammes, et tout spécialement 400 à 500 grammes, de charge.

6. Panneau stratifié (40 ; 40' ; 40" ; 40‴) selon l'une des revendications précédentes, **caractérisé en ce que** la charge est une charge minérale.

7. Panneau stratifié (40 ; 40' ; 40" ; 40‴) selon l'une des revendications précédentes, **caractérisé en ce que** la charge comprend un ou plusieurs des matériaux suivants :
un silicate, de préférence l'argile, le limon, le talc, le mica, le kaolin ou la silice de Neubourg ; un carbonate ou un sulfate, de préférence la craie, la dolomite, la baryte ou les perles de verre ;
ou de la farine de pierre, des fibres de verre, de la farine de quartz, de la silice cristalline, un hydroxyde d'aluminium ou de magnésium, un oxyde de magnésium, de zinc ou de calcium.

8. Panneau stratifié (40 ; 40' ; 40" ; 40‴) selon l'une des revendications précédentes, **caractérisé en ce que** la couche de contretraction a une épaisseur d'au moins 5 µm, de préférence d'au moins 10 µm, plus préférentiellement d'au moins 15 µm, d'une manière encore plus préférée d'au moins 50 µm, et tout spécialement d'au moins 75 µm.

9. Panneau stratifié (40 ; 40' ; 40" ; 40‴) selon l'une des revendications précédentes, **caractérisé en ce qu'**un kilogramme du matériau de contretraction durci contient en outre 1 à 500 grammes, de préférence 5 à 450 grammes, plus préférentiellement 10 à 400 grammes, d'une manière encore plus préférée 15 à 350 grammes, d'une manière toujours encore plus préférée 25 à 300 grammes, et tout spécialement 50 à 250 grammes, d'un plastifiant, de préférence le diéthylèneglycol et/ou l'ε-caprolactame.

10. Panneau stratifié (40 ; 40' ; 40" ; 40‴) selon l'une des revendications précédentes, **caractérisé en ce qu'**un kilogramme du matériau de contretraction durci contient en outre 1 à 500 grammes, de préférence 5 à 450 grammes, plus préférentiellement 10 à 400 grammes, d'une manière encore plus préférée 15 à 350 grammes, d'une manière toujours encore plus préférée 25 à 300 grammes, et tout spécialement 50 à 250 grammes, d'un épaississant, de préférence un sucre, plus préférentiellement un polysaccharide.

11. Panneau stratifié (40 ; 40' ; 40" ; 40‴) selon l'une des revendications précédentes, **caractérisé en ce qu'**en outre la charge est une charge organique, et comprend en particulier de la cellulose ou de la farine de bois.

12. Panneau stratifié (40 ; 40' ; 40" ; 40‴) selon l'une des revendications précédentes, **caractérisé en ce qu'**un kilogramme du matériau de contretraction durci contient :
Résine aminoplaste : Charge :
400 à 650 grammes, 350 à 600 grammes ;
tout spécialement :
500 à 600 grammes 400 à 500 grammes.

13. Procédé de fabrication d'un panneau stratifié selon l'une des revendications 1 à 12, le procédé comprenant les étapes suivantes :
- fourniture d'une couche support ;
- fourniture d'un décor sur au moins la face supérieure de la couche support
- application de résine sur la face support de la couche support à l'état liquide ;
- application d'un matériau de contretraction, qui ne comprend pas de couche de papier, sur la face arrière de la couche support à l'état liquide ;
- dans une étape suivante, durcissement de la résine et du matériau de contretraction, de façon que
un kilogramme du matériau de contretraction durci contienne les constituants suivants:
Résine aminoplaste : 300 à 700 grammes,
Charge : 300 à 700 grammes ; et
- après ou pendant le durcissement de la résine et du matériau de contretraction :
- compression des couches produites lors des étapes précédentes, pour donner un panneau stratifié.

14. Procédé selon la revendication 13, **caractérisé en ce que**, dans une étape avant application du matériau de contretraction sur la face arrière de la couche support, la résine aminoplaste du matériau de contretraction est fabriquée par mélange (i) de mélamine et/ou d'un dérivé de l'urée et (ii) d'un aldéhyde, de préférence le formaldéhyde, la fabrication de la résine aminoplaste étant réalisée par mélange de 1 mole de la mélamine et/ou du dérivé de l'urée avec 0,5 à 3 moles, de préférence 1 à 2,5 moles, plus préférentiellement 1,25 à 2,25 moles et tout spécialement 1,4 à 2,1 moles, de l'aldéhyde.

15. Matériau de contretraction convenant à une utilisation en tant que couche de contretraction sans couche de papier pour des panneaux stratifiés qui comportent une couche support en bois ou en un matériau à base de bois, dans lequel au moins la face supérieure du panneau stratifié comprend un décor et une couche en une résine durcie,
**caractérisé en ce que**
1 kilogramme du matériau de contretraction à l'état durci contient
| | |
|---|---|
| Résine aminoplaste (durcie) : | 300 à 700 grammes |
| Charge : | 300 à 700 grammes, |
la résine aminoplaste étant fabriquée par mélange de 1 mole de mélamine et/ou d'un dérivé de l'urée avec 0,5 à 3 moles d'aldéhyde, de préférence 1 à 2,5 moles, plus préférentiellement 1,25 à 2,25 moles et tout spécialement 1,4 à 2,1 moles, d'aldéhyde.
